# EUROPEAN PATENT SPECIFICATION

(11) **EP 3 835 134 B1**
(45) Date of publication and mention of the grant of the patent: **24.05.2023**
(21) Application number: 19214492.1
(22) Date of filing: 09.12.2019
(51) Int. Cl.: B60R 11/04

(54) **ATTACHMENT ARRANGEMENT FOR A CAMERA MODULE AT A VEHICLE**
BEFESTIGUNGSANORDNUNG FÜR EIN KAMERAMODUL AN EINEM FAHRZEUG
AGENCEMENT DE FIXATION POUR MODULE DE CAMÉRA SUR UN VÉHICULE

(43) Date of publication of application: 16.06.2021
(73) Proprietor: Arriver Software AB, 583 30 Linköping (SE)
(72) Inventor: ROSENLUND, Erik, 583 30 Linköping (SE); KASARLA, Nagender, 583 30 Linköping (SE)
(74) Representative: Wagner & Geyer

(56) References cited:
- EP-A1- 3 103 684
- EP-A1- 3 330 131
- EP-B1- 3 180 212
- WO-A1-2018/092473
- WO-A1-2019/222291
- US-A1- 2018 361 947

## Description

The invention relates to an attachment arrangement for a camera module at a vehicle comprising the features of the preamble of claim 1.

From the EP 3 180 212 B1 an attachment arrangement is known The attachment arrangement comprises a base plate which is designed to be fixed at the vehicle structure and which serves as a base to attach a camera module. The base plate could be fixed for example at a front window of the vehicle by gluing and comprises several attachment flanges for the attachment of the camera module. The camera module comprises a housing with several outwardly extending protrusions and one or two cameras arranged therein, wherein the camera module is attachable via the protrusions of the housing at the attachment flanges of the base plate.

The attachment flanges are shaped roof-like in a U-shaped or V-shaped manner and are arranged with the opening in opposite to the mounting direction to prevent an unintended release of the camera module from the base plate in case of an accident. Furthermore, metal springs are arranged in the attachment flanges to tension the camera module into the mounting position. The metal springs are designed as flat metal plates and are positioned in the opening of the flanges in a predetermined position, so that the camera module abuts with the protrusions at the metal springs in the mounting position and is tensioned by the springs to the mounting position. The purpose of the metal springs is a reduction of the transmission of vibrations and to ensure that the camera module is kept in the predetermined orientation and position with a high precision. The metal springs are designed as separate parts from a different material than the base plate and need to be assembled in a separate assembling step which increases the effort for assembling the base plate. Furthermore, the use of a different material for the springs shows that the design requires a high strength of the springs and further results, in a high local loading of the flanges and the protrusions for tensioning the camera module versus the base plate to the mounting position.

Document WO 2019/222291 A1 discloses an attachment arrangement according to the preamble of claim 1.

It is therefore the object of the invention to provide an attachment arrangement for a camera module at a vehicle, with a reduced maximum of local loading of the base plate and of the housing of the camera module when the camera module is tensioned versus the base plate to the mounting position. According to the invention it is suggested an attachment arrangement comprising the features of claim 1. Further preferred embodiments are given in the subclaims and may be further obtained from the figures and the related description. According to the basic idea of the invention it is suggested that the spring is designed as an integrated part of the housing or the base plate. The spring is a part of the housing or the base plate and can be manufactured in one step when manufacturing and forming the housing or the base plate. Therefore, the assembly effort of production can be facilitated in general as the spring does not need to be mounted in a separate assembly step anymore. Furthermore, the spring cannot get lost during the further assembly of the camera module with the base plate and when using the camera module in general.

A very easy and reliant design regarding manufacturing and handling can be realized by designing the spring as a leaf spring extending from the housing or the base plate to the outside. The leaf spring can be designed very easily by cutting out a section of the housing or of the base plate and to form the cut-out section to extend to the outside.

One preferred solution would be to design the spring and the housing or the base plate as a single molding part. The spring is therefore formed when forming the housing or the base plate as an integrated part or section in the molding process.

In this case it is preferred that the spring is made of resin and in a further preferred embodiment it is preferred that the resin is fiber reinforced. If the base plate and/or the housing is also made of resin or of fiber reinforced resin the base plate and/or the housing can be made of the same material as the spring, or in other words the spring may be formed as a part of the base plate or of the housing.

According to the invention the spring and the attachment flange do not overlap each other in a perpendicular direction to an attachment surface of the housing or an attachment surface of the base plate at the vehicle structure. As the parts do not overlap each other, the housing or the base plate can be manufactured in a molding process with only two tooling halves and the molding process itself may be facilitated.

According to another preferred embodiment it is suggested that there are provided at least two springs acting in different directions, so the camera module can be positioned with a higher precision with respect to a predetermined position with respect to at least two different directions.

A very high precision in the attachment can be achieved by providing three springs with one first and one second spring acting with parallel spring forces and one third spring with a spring force which is orientated oblique to the spring forces of the first and second spring. The first and second spring are acting in parallel directions and defining therefore a support in a plane which is defined finally by the spring force of the third spring.

Furthermore, it is suggested that the attachment flanges comprise at least one guiding surface which is shaped ramp-liked and reduces the width of the openings in insertion direction of the protrusions. The guiding surface facilitates the insertion movement and the finding of the final attachment position.

Furthermore, it is suggested that at least one of the protrusions is designed spherical and at least one of the attachment flanges at which the spherical protrusion abuts comprises two inner surfaces arranged in an angle of greater than 90 degree but smaller than 180 degree versus each other. The spherical protrusions are manufactured in a molding process with two molding tools each having a cavity in which one half of the spherical protrusion is manufactured in an injection molding process, so that the partition line runs through the center of the spherical protrusion. The partition line results in a possible edge running around the circumference of the spherical protrusion. The advantage of the suggested arrangement of the inner surfaces is that it is prevented that the spherical protrusion abuts with an edge resulting from the partition line, which enables an attachment of the camera module with a higher precision as the possible edge does not influence the attachment position.

In the following the invention is illustrated on the basis of a preferred embodiment with reference to the accompanying drawings, wherein:
- Fig. 1: shows the camera module with the base plate in view to the backside, and
- Fig. 2: shows the camera module with the base plate in view to the frontside, and
- Fig. 3: shows the camera module with the base plate in view to the electrical connecting side, and
- Fig. 4: shows the camera module with the base plate in view to the bottom side of the base plate, and
- Figs.5: shows the camera module with the base plate in view to the bottom side of the base plate with different cutting lines of sections, and
- Fig. 6 to 10: shows the sections according the cutting lines of Fig. 5, and
- Fig. 11: two different sections of the base plate through one rear and one front attachment flange, and
- Fig. 12: another two different sections of the base plate through the front attachment flange, and
- Fig. 13: shows an alternative second embodiment, and
- Fig. 14: shows an attachment flange of the second embodiment in an enlarged view, and
- Fig. 15: shows a cut through an attachment flange of the second embodiment with a abutting protrusion of the camera module.

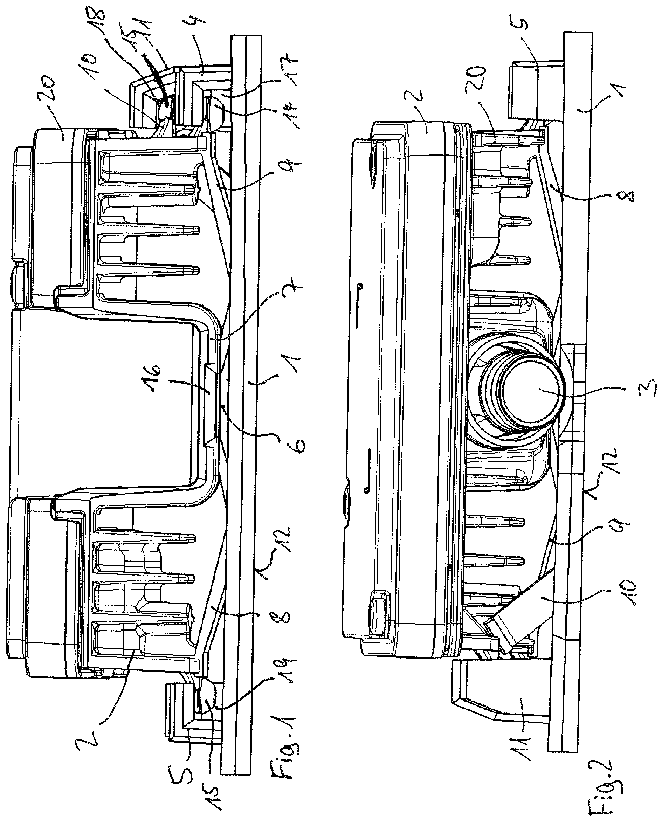

In the figures 1 to 4 it is shown a camera module 2 with a base plate 1 which are connected according to a suggested attachment arrangement. The base plate 1 comprises a flat attachment surface 12 to connect the base plate 1 to a vehicle structure. One possible embodiment is to attach the base plate 1 with the attachment surface 12 for example by gluing at a front or rear window of the vehicle.

The camera module 2 is provided with one camera 3 as a mono camera but it may be also provided with an additional camera to realize a stereo camera if needed. The correct orientation and position of the camera 3 is an essential quality criterion for the functionality of the camera 3 and especially for the quality and analysis of the image data and the processing of the signals derived therefrom. Therefore, a precise and reliant attachment of the camera module 2 is of very high importance for the camera module 2 itself and the quality of the signals processed from the detected data of the camera module 2.

The base plate 1 comprises the attachment surface 12 to mount the base plate 1 at the vehicle structure. The other side of the base plate 1 is used to attach the camera module 2.

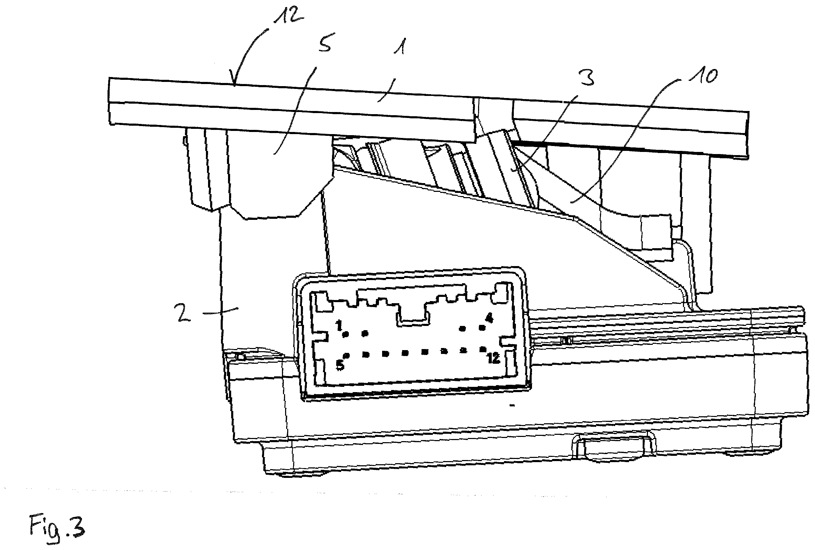

The camera 3 is directed to the outside of the vehicle, which means for an attachment at the front window, that the camera 3 is directed in the mounted position of the camera module 2 to the frontside of the vehicle. In figure 3 the right side of the illustration would be therefore the front side of the vehicle if the camera module 2 would be mounted in this position. The direction of the camera 3 will be designated in the following as the detection direction.

The camera module 2 comprises a housing 20 with three outwardly extending protrusions 13, 14 and 15. The protrusions 13,14 and 15 are formed spherical in shape of half or full size balls and extend radially to the outside of the housing 20.

The base plate 1 comprises three flanges 4, 5 and 11 in shape of a roof like structure each having an opening 17, 18 and 19 through which the camera module 2 may be introduced with the protrusions 13, 14 and 15. Furthermore, the base plate 1 is provided with three springs 8, 9 and 10 which are arranged in that way, that they get in contact with the housing 20 and/or with the protrusions 13,14 and 15 of the camera module 2 when the camera module 2 is inserted with the protrusions 13, 14 and 15 into the openings 17, 18 and 19. The springs 8,9 and 10 are designed as integrated parts of the base plate 1 extending in a predetermined direction to the outside of the base plate 1. All springs 8, 9 and 10 are designed as leaf springs and are connected which one side with the base plate 1 while the other end is free, so that the springs 8, 9 and 10 may perform with their free ends resilient movements with respect to the base plate 1. The springs 8, 9 and 10 are positioned and formed in such a way that the camera module 2 gets in contact with the housing 20 and/or the protrusions 13,14 and 15 at the springs 8, 9 and 10 and is therefore spring loaded during the attachment movement. In the final mounting position the camera module 2 is tensioned via the springs 8, 9 and 10 abutting at the housing 20 and/or at the protrusions 13,14 and 15 to the mounting position, which is defined by the shape of the protrusions 13, 14 and 15 and the opposite surfaces in the openings 17, 18 and 19 of the roof like flanges 4, 5 and 11. The camera module 2 is tensioned by the forces applied by springs 8, 9 and 10 with the protrusions 13, 14 and 15 into the openings 17, 18 and 19 of the flanges 4, 5 and 11 into a predetermined position. As the springs 8, 9 and 10 are abutting at the housing 20, it may be used a much greater surface to apply the spring load and the camera module 2 may be spring loaded from different and optimized directions compared to the solution known in the prior art.

The springs 8, 9 and 10 comprise one first spring 8 and one second spring 9 which are designed as cut-outs and bent to the mounting side of the base plate 1 like shown in the figures 1 to 3 and 6 to 10. The free ends of the first spring 8 and the second spring 9 are faced towards a first flange 5 and a second flange 4 each having an opening 17 and 19 (see fig. 1) and a roof. The first and second spring 8 and 9 are formed as leaf springs with an approximately parallel spring direction perpendicular to the surface of the base plate 1 from which they are extending. The third spring 10 is designed also as a cut-out of the base plate 1 and is formed as an upwardly extending arm acting also as a leaf spring. The third spring 10 is designed with a much higher extension than the first and the second spring 8 and 9 and faces towards a third flange 11 which is also higher than the first and second flange 4 and 5 but also in a shape of a roof structure with an opening 18.

The openings 17, 18 and 19 of the flanges 4, 5 and 11 are directed opposite to the detection direction of the camera module 2 to the mounting position, so that the camera module 2 may be inserted with the protrusions 13, 14 and 15 in detection direction into the openings 17,18 and 19 of the roof shaped flanges 4, 5 and 11 to the mounting position. The roof shaped flanges 4, 5 and 11 are closed at the frontside so that the inserting movement is stopped and the camera module 2 is blocked against a movement towards the detection direction for example in case of an accident.

The first and second spring 8 and 9 got a parallel spring direction which is oriented perpendicular to the base plate 1, so that the first and second spring 8 and 9 are pressed towards the base plate 1 by abutting at the housing 20 when the camera module 2 is inserted. In the final mounting position the camera module 2 is pressed with the first and second protrusion 14 and 15 into the openings 17 and 19 of the first and second flange 4 and 5 by the applied spring forces of the first and second spring 8 and 9. At the same time the housing 20 gets into contact with the third protrusion 13 at the side of the third spring 10. The third spring 10 urges the housing 20 and the camera module 2 during the inserting movement via the abutting third protrusion 13 to the mounting position, which is defined in sidewise direction by the shape of the cavity and the abutment surface inside the roof like shaped third flange 11.

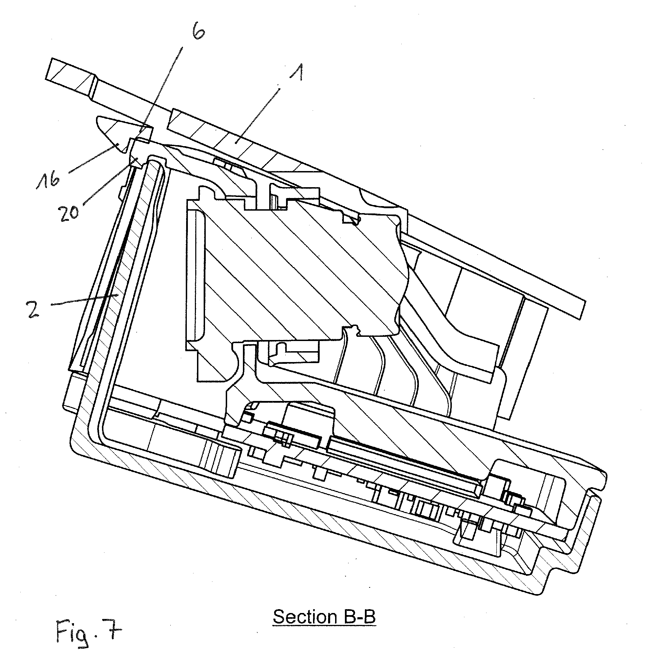

The base plate 1 comprises further a resilient arm 6 with a locking hook 16 at the free end, as it is shown in the figures 1,4 and 7. The locking hook 16 is formed as a tip, which is directed to the rim of the base plate 1. The resilient arm 6 is extending from a center of the base plate 1 against the inserting direction of the camera module 2 in an oblique upright direction. Therefore, the resilient arm 6 is pressed towards the base plate 1 when the camera module 2 is inserted by the abutting housing 20 of the camera module 2. When the camera module 2 is positioned in the final mounting position the resilient arm 6 moves upwards and the locking hook 16 engages the housing 20 of the camera module 2 at a rear side with respect to the detection direction like shown in figure 7. Thereby the locking hook 16 prevents a backward movement of the camera module 2 out of the attachment position in the direction against the detection direction. The locking hock 16 secures the camera module 2 in the final mounting position against a backward movement with respect to the inserting direction.

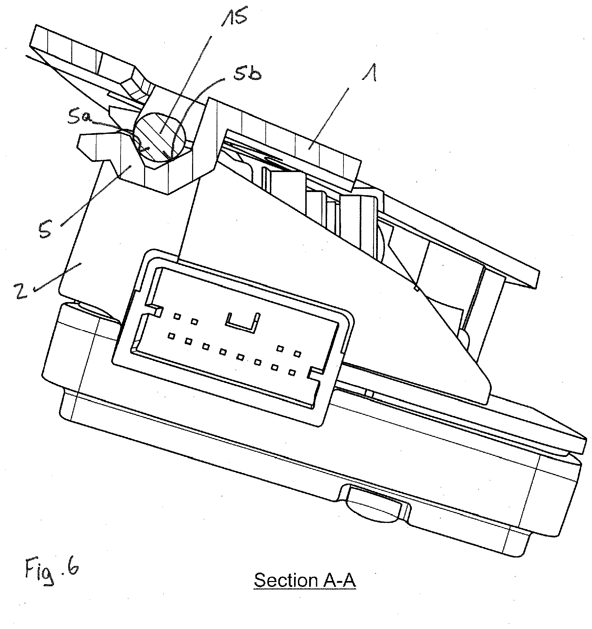

The mounting position of the camera module 2 is specified by the shape of the inner surfaces of the flanges 4, 5 and 11 and the shape and positions of the protrusions 13, 14 and 15 at the housing 20. The inner surfaces act as an abutment for the protrusions 13, 14 and 15. The springs 8,9 and 10 and the flanges 4, 5 and 11 are formed in the base plate 1 as one single part, so they got a fixed relation in their positions versus each other. Therefore, the base plate 1 define the mounting position of the camera module 2 with a very high precision, and the mounting position is not dependent on any further part or any further assembly process. The protrusions 13, 14 and 15 are designed spherical, which enables also a very high precision of the mounting as the protrusions 13, 14 and 15 are abutting therefore only punctual in two points at the inner surfaces 4a,4b,5a,5b,11a and 11b shown in the Figures 6 to 12. Nevertheless, it would be also possible to use protrusions 13, 14 and 15 in the shape of bolts or the like.

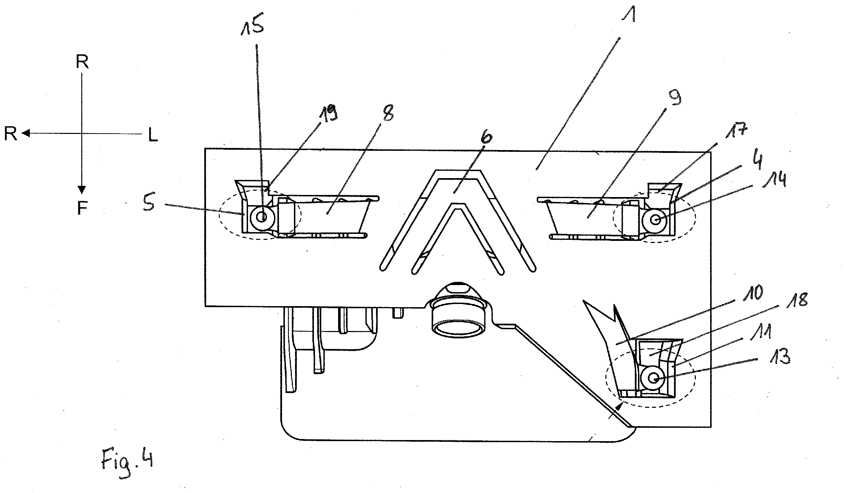

The rear attachment flanges 4 and 5 positioned at the rear part of the base plate 1 and are designed to define the position of the camera module 2 in relation to the front-rear (F-R) direction and to the top-bottom (T-B) direction. The third front attachment flange 11 is designed to adjust the position of the camera module 2 in left-right (L-R) direction and also in relation to the Top-Bottom (T-B) direction (see also Fig.4) .

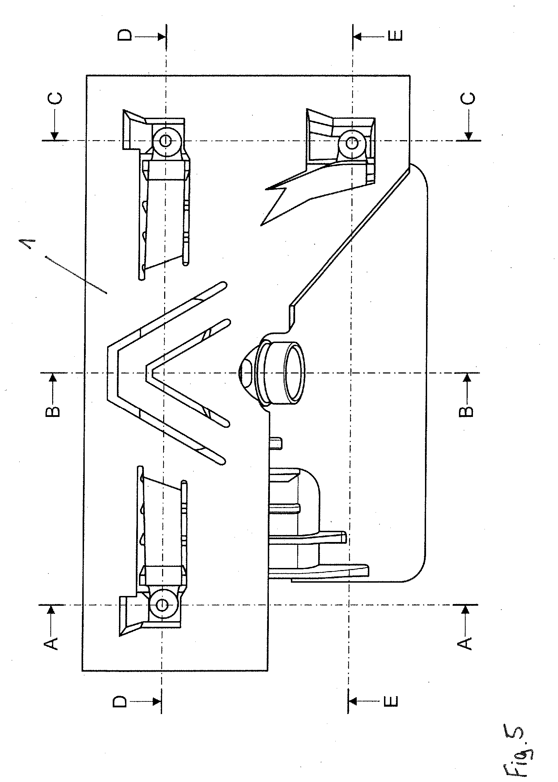

In Fig. 5 the base plate 1 with the camera module 2 is shown from the bottom side with different lines of sections, which are shown in the following figures 6 to 10.

Fig. 6 shows the section A-A through the left rear attachment flange 5 with the inserted protrusion 15. The attachment flange 5 got a roof like structure with two flat inner abutment surfaces 5a and 5b, which are aligned in an angle to each other, so that the spherical protrusion 15 abuts with only two single points at the inner surfaces 5a and 5b of the attachment flange 5.

Fig. 7 shows the section B-B through the center of the base plate 1 in front-rear direction, with cutting the resilient arm 6. The camera module 2 is inserted to a position that the resilient arm 6 engages the rear edge of the housing 20 with the locking hook 16, so that the camera module 2 is secured in the mounting position even when acceleration forces in the rearward direction are acting on the camera module 2.

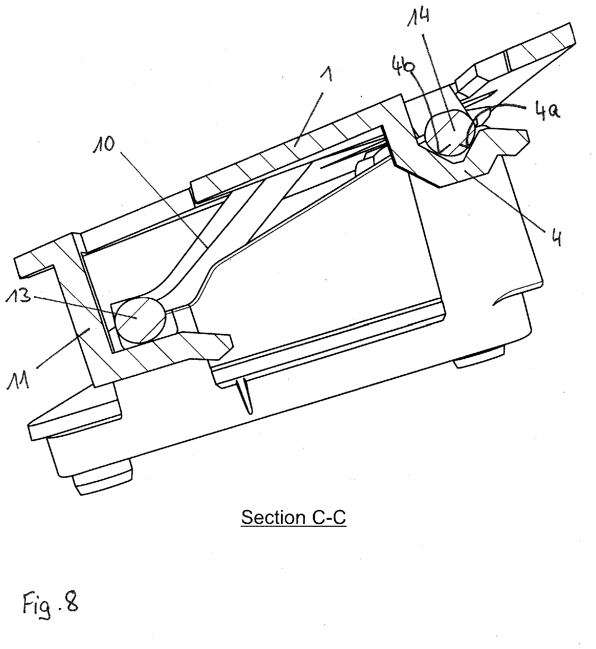

Fig. 8 shows the section C-C with cutting through the right rear attachment flange 4 and the third front attachment flange 11. The right rear attachment flange 4 is designed symmetrically to the left rear attachment flange 5 shown in Fig. 6. The right rear attachment flange 4 comprises also two flat inner abutment surfaces 4a and 4b which are aligned in an angle to each other, so that the spherical protrusion 14 abuts with two single points at the inner surface 4a and 4b of the attachment flange 4.

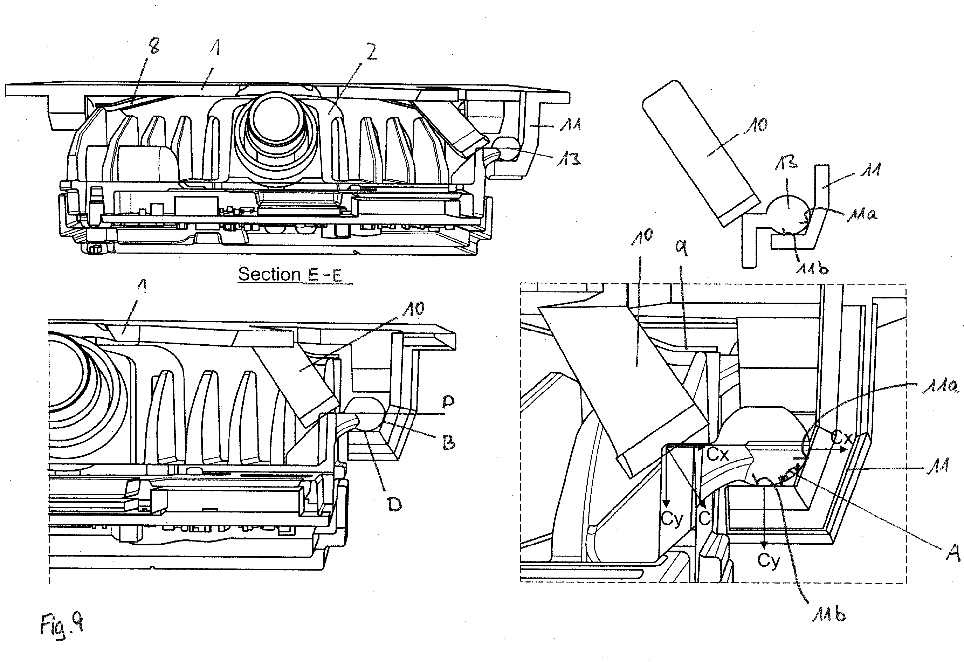

In Fig. 9 it is shown the section E-E through the third front attachment flange 11. The third front attachment flange 11 comprises also two flat inner abutment surfaces 11a and 11b, which are aligned in front-rear direction regarding to the mounting position of the camera module 2 and in an angle A of greater than 90 degrees but smaller than 180 degrees. Therefore, the camera module 2 is positioned with the spherical protrusion 13 abutting at two contact points B and D at the abutment surfaces 11a and 11b. Because of the angle A being greater than 90 degrees both contact points B and D are positioned on the same side and here below a partition line P, which could be also the center line of the protrusion 13. The partition line P corresponds to the line or the level of two casting halves of a molding tool, in which the housing 20 is formed by injection molding of resin. Because of the manufacturing process there is a risk that the protrusion 13 comprises a small edge running around the circumstance which could deteriorate the positioning of the camera module 2 when abutting at the inner surfaces 11a and 11b. Because of the angle A being greater than 90 degrees the protrusion 13 abuts always with a point B located below the partition line P and not with the edge of the partition line P at the inner surfaces 11a and 11b of the third attachment flange 11.

The spring 10 is tensioning the protrusion 13 in an oblique direction C from above versus the inner surfaces 11a and 11b of the front attachment flange 11, so that the protrusion 13 is pressed against the inner abutment surfaces 11a and 11b by a vertical force CY and a horizontal force CX.

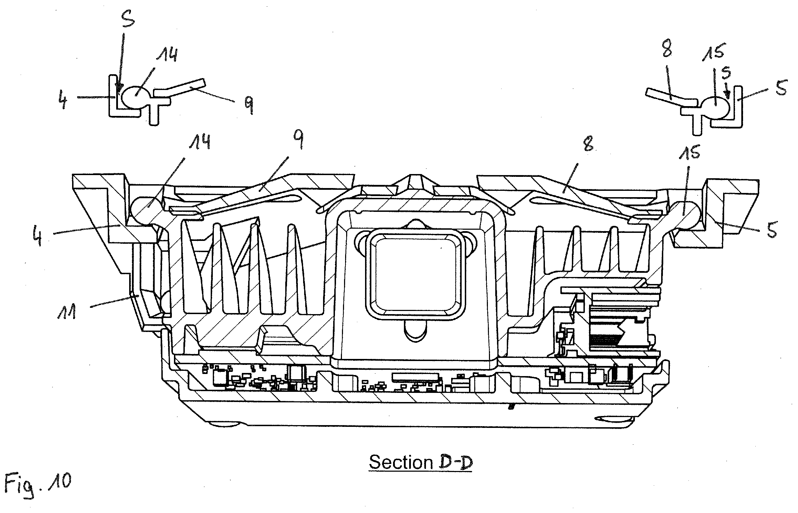

In Fig. 10 it is shown the section D-D through the rear left and right attachment flanges 4 and 5 with the inserted protrusions 14 and 15. The springs 8 and 9 abutting at the housing 20 and tensioning the protrusions 14 and 15 versus the inner abutment surfaces 4a,4a and 5a,5b of the attachment flanges 4 and 5 shown in Fig. 6 and 8 and aligning thereby the camera module 2 in front rear direction. Furthermore, the attachment flanges 4 and 5 are designed to provide a small gap S between the protrusions 14 and 15 and the attachment flanges 4 and 5 in left-right direction, so that the position of the camera module 2 in left-right direction is only defined by the third flange 11.

The attachment of camera module 2 is realized by the suggested solution with a very high precision with a punctual abutment of the protrusions 13, 14 and 15 at the inner abutment surfaces 4a,4b,5a,5b, 11a and 11b, while the abutment points of the protrusions 14 and 15 define the position of the camera module 2 in front-rear direction and in top-bottom direction, and the abutment of the protrusion 13 defines the position of the camera module in left-right direction and in top-bottom direction. Thereby, the position of the camera module 2 is defined in all planes with respect to the base plate 1.

For a precise attachment with respect to a predefined position it is especially important that the rear attachment flanges 4 and 5 are designed to provide a gap S between the protrusions 14, 15 and the left and right inner side walls of the attachment flanges 4 and 5, so that the position of the camera module 2 is defined only by the position of the contact point of the protrusion 13 at the inner side surface 11a.

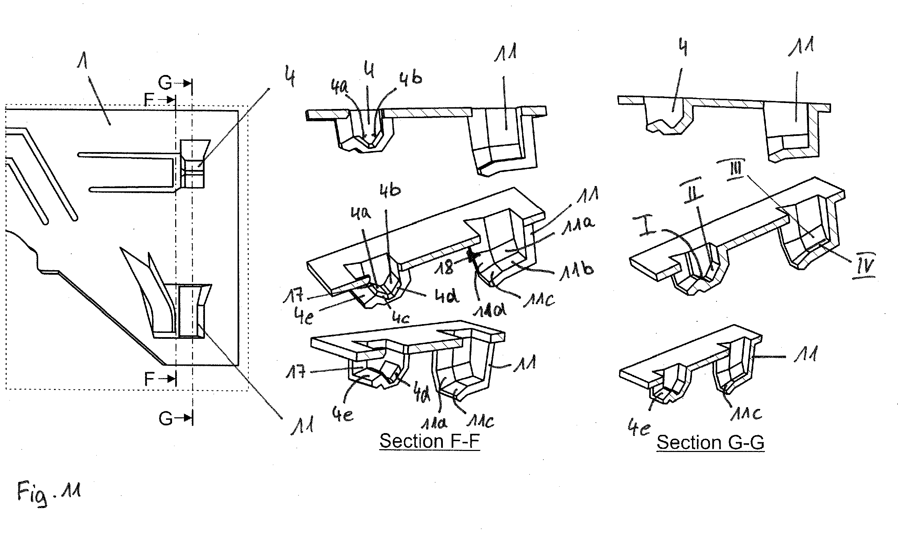

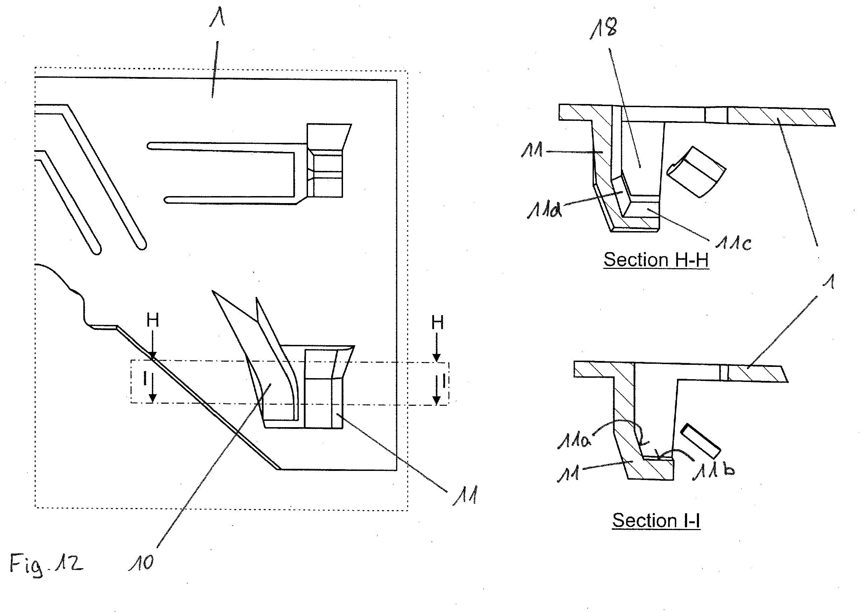

In the Fig. 11 and 12 are shown different sections in front-rear directions and left-right direction through the right rear attachment flange 4 and the front attachment flange 11 without the protrusions 13 and 14. The left rear attachment flange 5 is designed symmetrically with an identical shape compared to the right rear attachment flange 4, so the description of the right rear attachment flange 4 is also applicable to the left rear attachment flange 5.

In the Fig. 11 are shown two sections F-F and G-G in front-rear direction which corresponds to the detection direction of the camera module 2 and in case of a front camera installed at the front window also to the forward driving direction of the vehicle. The section F-F in the middle shows the flanges 4 and 11 provided with guiding surfaces 4e,4d,4c,11c and 11d which are inclined with respect to the inner abutment surfaces 4a,4b,11a and 11b and facilitates the inserting movement of the protrusions 14 and 13 into the attachment flanges 4 and 11. The guiding surfaces 4e,4d,4c,11c and 11d are inclined versus the inner surfaces 4a,4b,11a and 11b like ramps and reduce therefore the width of the openings 17 and 18 in the insertion direction, so that the camera module 2 is focused automatically into the final attachment position when inserting with the protrusions 13,14 and 15 into the attachment flanges 4,5 and 11. The camera module 2 find therefore itself its final attachment position without any further manual adjustment or corrections. At the right rear attachment flange 4 are provided three guiding surfaces 4c,4d and 4e, with two sidewise in left-right direction oriented guiding surfaces 4c and 4d and one guiding surface 4e arranged in front-rear direction. The front attachment flange 11 comprises two guiding surfaces 11c and 11d, with one guiding surface 11c located at the bottom, which is inclined to the bottom inner surface 11b of the attachment flange 11, and enables a lifting movement of the protrusion 13 towards the inner surface 11b when inserting into the attachment flange 11. The other guiding surface 11d is located at the side wall of the attachment flange 11 and enables a sidewise positioning of the protrusion 13 when inserting into the attachment flange 11.

The two guiding surfaces 11c and 11d are also shown in the section H-H of Fig. 12. The guiding surfaces 11c and 11d reduce the width of the opening 18 continuously in direction of the inserting movement until the final width of the opening 18 defined by the inner surfaces 11a and 11b shown in the section I-I is reached.

The final position of the camera module 2 in front-rear direction is specified by two defined attachment points I and II at the right rear attachment flange 4. The shape of the right rear attachment flange 4 is designed in such a manner that the camera module 2 abuts automatically with the protrusion 14 at these attachment points I and II, without any further adjustment. The left rear attachment flange 5 comprises corresponding attachment points which completes the attachment of the camera module 2 at the right rear attachment flange 4 to a distanced two-point attachment. Furthermore, the top-bottom position of the camera module 2 is also defined by the attachment points I and II at the rear right and left attachment flanges 4 and 5. The front attachment flange 11 comprises also two attachment points III and IV at which the camera module 2 abuts automatically when inserted. The attachment point IV defines the position of the camera module 2 in top-bottom direction and completes the positioning of the camera module 2 at the right and left rear attachment flanges 4 and 5 to a three-point attachment in top-bottom direction. The second attachment point III is located at the inner surface 11a which is inclined in an angle greater that 90 degrees but smaller than 180 degrees, in this case approximately 100 degrees, versus the bottom inner surface 11b. The second attachment point III defines the position of the camera module 2 in left-right direction, which is sufficient as a further rotation of the camera module 2 is prevented by the attachment of the camera module 2 in front-rear direction in the two rear attachment flanges 4 and 5.

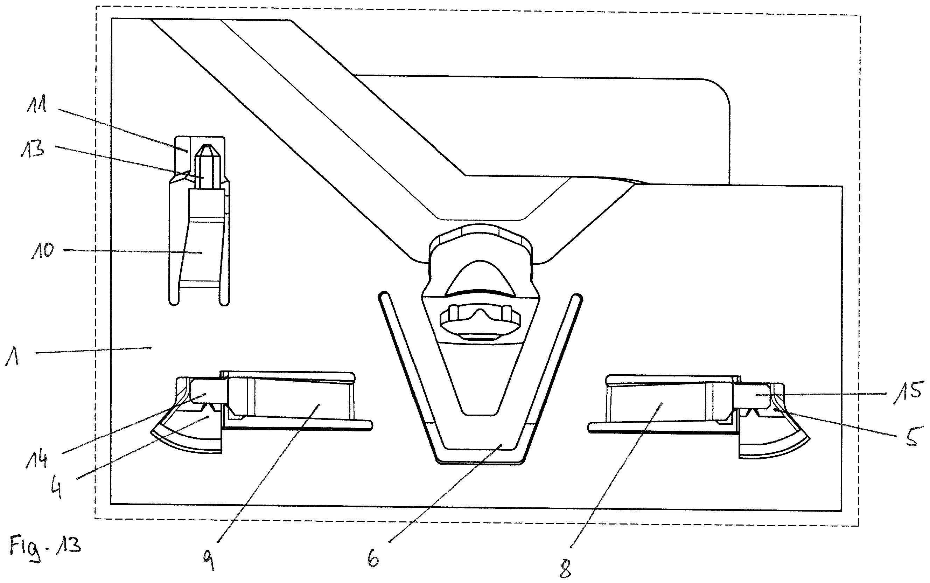

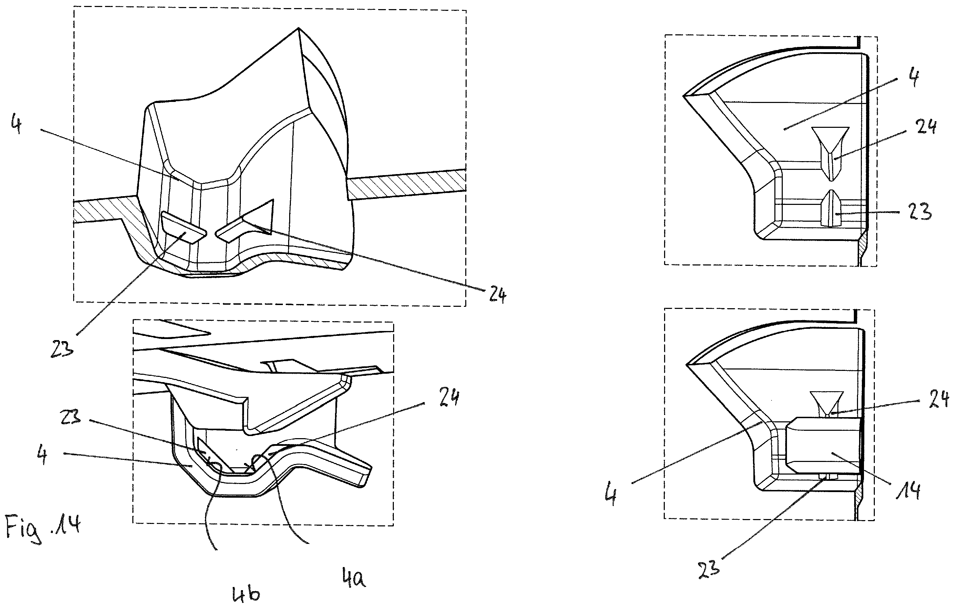

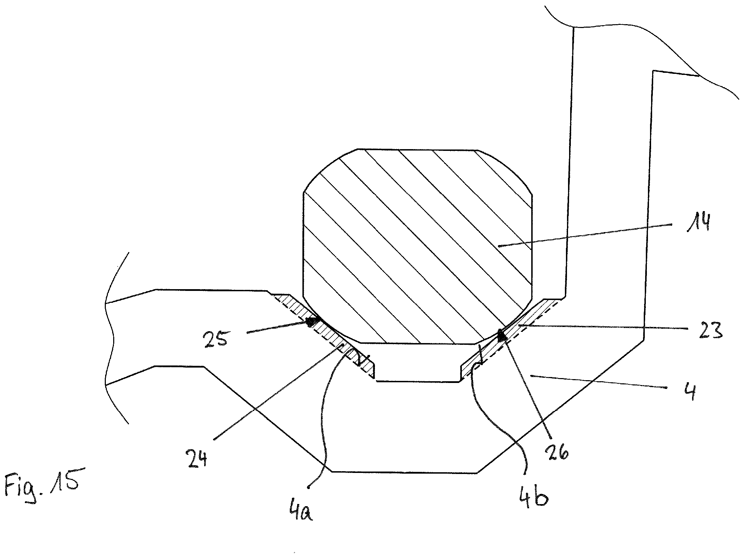

In the Fig. 13 to 15 it is shown a second embodiment which differs from the first embodiment by the shape of the protrusions 13,14 and 15 and by the shape of the attachment flanges 4,5 and 11. The protrusions 14 which is shaped in the cross section identical to the not shown protrusions 13 and 15, is shaped as a cylindrical pin having a squared cross section with rounded edges 25 and 26 or in other words it is shaped cylindrical in a circular cross section with four flattened side surfaces. The rounded edges 25 and 26 of the protrusions 13,14 and 15 may have therefore identical radiuses and/or the protrusions 13,14 and 15 may have therefore identical flattened side surfaces. The rounded edges 25 and 26 may have also identical radiuses at the side abutting at the inner surfaces 4a and 4b but at the not abutting side other radiuses especially smaller radiuses than on the abutting side. This may be easily realized by cutting out an eccentrical square from the circular cross section of the protrusions 13,14 and 15.

The attachment flanges 4,5 and 11 are each provided at the inner abutment surfaces 4a,4b,5a,5b,11a,11b with two linear ribs 23 and 24 having a peak form in cross section. The linear ribs 23 and 24 of the right and left rear attachment flanges 4 and 5 are arranged perpendicular to the length axis of the protrusions 13,14 and 15 abutting thereon and parallel to the inserting or mounting direction of the camera module 1 and of the protrusions 14 and 15. Because of the alignment of the ribs 23 and 24 to the inserting movement the movement of the camera module 1 may be facilitated as the ribs enable a guidance of the movement. The linear ribs 23 and 24 at the third front attachment flange 11 are also aligned perpendicular to the length axis of the protrusion 13 abutting thereon but also perpendicular to the mounting or inserting direction of the protrusion 13. To facilitate the inserting movement the protrusion 13 is designed conical at the front end.

The ribs 23 and 24 provide a linear abutment lines, which results in a punctual contact with the rounded edges 25 and 26. These punctual contacts enables a definition of the final attachment position of the camera module 1 with a very high precision with respect to a predefined position. Furthermore, the ribs 23 and 24 enables an attachment in this high precision also independent from possible dirt particles, as these dirt particles may enter into the cavities provided by the ribs at their sides.

The ribs 23 and 24 are arranged at the inner abutment surfaces 4a,4b,5a,5b,11a,11b which are aligned in an angle versus each other. Furthermore, the ribs 23 and 24 got a constant height, so that they are aligned also in this angle versus each other.

## Claims

1. Attachment arrangement for a camera module (2) at a vehicle comprising
- a base plate (1) with attachment flanges (4, 5, 11) providing attachment openings (17, 18, 19), wherein
- the base plate (1) is attachable at a vehicle fixed structure, wherein
- the camera module (2) comprises a housing (20) and at least one camera (3) arranged therein, wherein
- the housing (20) comprises protrusions (13, 14, 15) extending outwardly from the housing (20) and shaped to engage in a mounting position into the attachment openings (17,18,19), wherein
- at least one spring (8, 9, 10) is provided for tensioning the camera module (2) to the mounting position when the camera module (2) is mounted at the vehicle, wherein
- the spring (8, 9, 10) is designed as an integrated part of the housing (20) or the base plate (1) ,
**characterized in that**
- the spring (8, 9, 10) and the attachment flanges (4, 5, 11) do not overlap each other in a perpendicular direction to an attachment surface of the housing (20) or an attachment surface (12) of the base plate (1) at the vehicle structure, and
- at least one of the attachment flanges (4, 5, 11) comprises at least one inner abutment surface (4a, 4b, 5a, 5b, 11a, 11b) at least one rib (23, 24) arranged thereon.

2. Attachment arrangement according to claim 1, **characterized in that**
- the spring (8, 9, 10) is designed as a leaf spring extending from the housing (20) or the base plate (1) to the outside.

3. Attachment arrangement according to one of the claims 1 or 2, **characterized in that**,
- the spring (8, 9, 10) is made as a single molding part with the housing (20) or the base plate (1).

4. Attachment arrangement according to one of the claims 1 to 3, **characterized in that**
- the spring (8, 9, 10) is made of resin.

5. Attachment arrangement according to claim 4, **characterized in that**
- the resin is fiber reinforced.

6. Attachment arrangement according to one of the claims 1 to 5, **characterized in that**
- there are provided at least two springs (8, 9, 10) acting in different directions.

7. Attachment arrangement according to claim 6, **characterized in that**
- there are provided three springs (8, 9, 10) with one first and one second spring (8, 9) acting with parallel spring forces and one third spring (10) acting with a spring force which is orientated oblique to the spring forces of the first and second spring (8, 9).

8. Attachment arrangement according to one of the claims 1 to 7, **characterized in that**
- the attachment flanges (4, 5, 11) comprise at least one guiding surface (4c, 4d, 4e, 11c, 11d) which is shaped ramp-like and reduces a width of the openings (17, 18, 19) in an insertion direction of the protrusions (13, 14, 15).

9. Attachment arrangement according to one of the claims 1 to 8, **characterized in that**
- at least one of the protrusions (13, 14, 15) is designed spherical and at least one of the attachment flanges (11) at which the spherical protrusion (13, 14, 15) abuts comprises two inner surfaces (11a, 11b) arranged in an angle (A) of greater than 90 degree but smaller than 180 degree versus each other.

10. Attachment arrangement according to one of the claims 1 to 7 and 9, when claim 9 is not dependent on claim 8, **characterized in that**
- the rib (23, 24) is aligned parallel to an insertion direction of the protrusion (13, 14, 15) to the mounting position.

11. Attachment arrangement according to claim 8 or claim 9, when claim 9 is dependent on claim 8, **characterized in that**
- the rib (23, 24) is aligned parallel to the insertion direction of the protrusion (13, 14, 15) to the mounting position.

12. Attachment arrangement according to one of the claims 1 to 11, **characterized in that**
- at least one of the protrusions (13, 14, 15) is shaped as a cylindrical pin, and
- the pin is aligned perpendicular to the rib (23, 24).

## Patentansprüche

1. Befestigungsanordnung für ein Kameramodul (2) an einem Fahrzeug, die Folgendes aufweist:
- eine Basisplatte (1) mit Befestigungsflanschen (4, 5, 11), die Befestigungsöffnungen (17, 18, 19) vorsehen, wobei
- die Basisplatte (1) an einer fest angebrachten Fahrzeugstruktur befestigbar ist, wobei
- das Kameramodul (2) ein Gehäuse (20) und wenigstens eine Kamera (3), die darin angeordnet ist, aufweist, wobei
- das Gehäuse (20) Vorsprünge (13, 14, 15) aufweist, die sich von dem Gehäuse (20) nach außen erstrecken und geformt sind, so dass sie in einer angebrachten Position in die Befestigungsöffnungen (17, 18, 19) eingreifen, wobei
- wenigstens eine Feder (8, 9, 10) vorgesehen wird zum Spannen des Kameramoduls (2) in die Anbringungsposition, wenn das Kameramodul (2) an dem Fahrzeug angebracht ist, wobei
- die Feder (8, 9, 10) als ein integrierter Teil des Gehäuses (20) oder der Basisplatte (1) ausgelegt ist,
**dadurch gekennzeichnet, dass**
- die Feder (8, 9, 10) und die Befestigungsflansche (4, 5, 11) sich in einer senkrechten Richtung zu einer Befestigungsoberfläche des Gehäuses (20) oder einer Befestigungsoberfläche (12) der Basisplatte (1) an der Fahrzeugstruktur nicht überlappen, und
- wenigstens einer der Befestigungsflansche (4, 5, 11) wenigstens eine innere Angrenz- bzw. Anlegefläche (4a, 4b, 5a, 5b, 11a, 11b) mit wenigstens einer Rippe (23, 24), die darauf angeordnet ist, aufweist.

2. Befestigungsanordnung nach Anspruch 1, **dadurch gekennzeichnet, dass**
- die Feder (8, 9, 10) als eine Blattfeder ausgelegt ist, die sich von dem Gehäuse (20) oder der Basisplatte (1) nach außen hin erstreckt.

3. Befestigungsanordnung nach einem der Ansprüche 1 oder 2, **dadurch gekennzeichnet, dass**
- die Feder (8, 9, 10) als ein einzelnes Gussteil mit dem Gehäuse (20) oder der Basisplatte (1) hergestellt ist.

4. Befestigungsanordnung nach einem der Ansprüche 1 bis 3, **dadurch gekennzeichnet, dass**
- die Feder (8, 9, 10) aus Harz hergestellt ist.

5. Befestigungsanordnung nach Anspruch 4, **dadurch gekennzeichnet, dass**
- das Harz faserverstärkt ist.

6. Befestigungsanordnung nach einem der Ansprüche 1 bis 5, **dadurch gekennzeichnet, dass**
- wenigstens zwei Federn (8, 9, 10) vorgesehen sind, die in unterschiedliche Richtungen wirken.

7. Befestigungsanordnung nach Anspruch 6, **dadurch gekennzeichnet, dass**
- drei Federn (8, 9, 10) vorgesehen sind, wobei eine erste Feder und eine zweite Feder (8, 9) mit parallelen Federkräften wirken und eine dritte Feder (10) mit einer Federkraft wird, die schräg zu den Federkräften der ersten und zweiten Feder (8, 9) wirkt.

8. Befestigungsanordnung nach einem der Ansprüche 1 bis 7, **dadurch gekennzeichnet, dass**
- die Befestigungsflansche (4, 5, 11) wenigstens eine Führungsoberfläche (4c, 4d, 4e, 11c, 11d) aufweisen, die wie eine Rampe geformt ist und eine Breite der Öffnungen (17, 18, 19) in einer Einfügungsrichtung der Vorsprünge (13, 14, 15) verringert.

9. Befestigungsanordnung nach einem der Ansprüche 1 bis 8, **dadurch gekennzeichnet, dass**
- wenigstens einer der Vorsprünge (13, 14, 15) sphärisch konstruiert ist und wenigstens einer der Befestigungsflansche (11), an dem der sphärische Vorsprung (13, 14, 15) anstößt bzw. angrenzt, zwei Innenflächen (11a, 11b) aufweist, die in einem Winkel (A) zueinander angeordnet sind, der größer als 90 Grad aber kleiner als 180 Grad ist:

10. Befestigungsanordnung nach einem der Ansprüche 1 bis 7 und 9, wenn Anspruch 9 nicht von Anspruch 8 abhängig ist, **dadurch gekennzeichnet, dass**
- die Rippe (23, 24) parallel zu einer Einfügungsrichtung des Vorsprungs (13, 14, 15) in die Anbringungsposition ausgerichtet ist.

11. Befestigungsanordnung nach Anspruch 8 oder 9, wenn Anspruch 9 von Anspruch 8 abhängig ist, **dadurch gekennzeichnet, dass**
- die Rippe (23, 24) parallel zu der Einfügungsrichtung des Vorsprungs (13, 14, 15) in die Anbringungsposition ausgerichtet ist.

12. Befestigungsanordnung nach einem der Ansprüche 1 bis 11, **dadurch gekennzeichnet, dass**
- wenigstens einer der Vorsprünge (13, 14, 15) als ein zylindrischer Stift geformt ist, und
- der Stift senkrecht zu der Rippe (23, 24) ausgerichtet ist.

## Revendications

1. Agencement de fixation destiné à un module de caméra (2) au niveau d'un véhicule comprenant
- une plaque de base (1) munie de brides de fixation (4, 5, 11) fournissant des ouvertures de fixation (17, 18, 19), dans lequel
- la plaque de base (1) peut être fixée à une structure fixe du véhicule, dans lequel
- le module de caméra (2) comprend un boîtier (20) et au moins une caméra (3) agencée dans celui-ci, dans lequel
- le boîtier (20) comprend des saillies (13, 14, 15) s'étendant vers l'extérieur du boîtier (20) et formées pour s'engager dans une position de montage dans les ouvertures de fixation (17, 18, 19), dans lequel
- au moins un ressort (8, 9, 10) est prévu pour mettre sous tension le module de caméra (2) dans la position de montage lorsque le module de caméra (2) est monté au niveau du véhicule, dans lequel
- le ressort (8, 9, 10) est conçu comme une partie intégrante du boîtier (20) ou de la plaque de base (1),
**caractérisé en ce que**
- le ressort (8, 9, 10) et les bride de fixation (4, 5, 11) ne se chevauchent pas l'un l'autre dans une direction perpendiculaire à une surface de fixation du boîtier (20) ou à une surface de fixation (12) de la plaque de base (1) au niveau de la structure du véhicule, et
- au moins une des brides de fixation (4, 5, 11) comprend au moins une surface de butée interne (4a, 4b, 5a, 5b, 11a, 11b) au moins une nervure (23, 24) étant agencée sur celle-ci.

2. Agencement de fixation selon la revendication 1, **caractérisé en ce que**
- le ressort (8, 9, 10) est conçu comme un ressort à lame s'étendant depuis le boîtier (20) ou la plaque de base (1) jusqu'à l'extérieur.

3. Agencement de fixation selon l'une des revendications 1 ou 2, **caractérisé en ce que**
- le ressort (8, 9, 10) est formé sous forme d'une seule pièce moulée avec le boîtier (20) ou la plaque de base (1).

4. Agencement de fixation selon l'une des revendications 1 à 3, **caractérisé en ce que**
- le ressort (8, 9, 10) est en résine.

5. Agencement de fixation selon la revendication 4, **caractérisé en ce que**
- la résine est renforcée de fibres.

6. Agencement de fixation selon l'une des revendications 1 à 5, **caractérisé en ce que**
- il est prévu au moins deux ressorts (8, 9, 10) agissant dans des directions différentes.

7. Agencement de fixation selon la revendication 6, **caractérisé en ce que**
- il est prévu trois ressorts (8, 9, 10) avec un premier et un deuxième ressort (8, 9) agissant avec des forces de ressort parallèles et un troisième ressort (10) agissant avec une force de ressort qui est orientée obliquement par rapport aux forces de ressort du premier et du deuxième ressort (8, 9).

8. Agencement de fixation selon l'une des revendications 1 à 7, **caractérisé en ce que**
- les brides de fixation (4, 5, 11) comprennent au moins une surface de guidage (4c, 4d, 4e, 11c, 11d) qui est en forme de rampe et réduit une largeur des ouvertures (17, 18, 19) dans une direction d'insertion des saillies (13, 14, 15).

9. Agencement de fixation selon l'une des revendications 1 à 8, **caractérisé en ce que**
- au moins une des saillies (13, 14, 15) est conçue sphérique et au moins une des brides de fixation (11) contre laquelle la saillie sphérique (13, 14, 15) vient en butée comprend deux surfaces intérieures (11a, 11b) agencées selon un angle (A) supérieur à 90 d il est prévu egrés mais inférieur à 180 degrés l'un par rapport à l'autre.

10. Agencement de fixation selon l'une des revendications 1 à 7 et 9, lorsque la revendication 9 ne dépend pas de la revendication 8, **caractérisé en ce que**
- la nervure (23, 24) est alignée parallèlement à une direction d'insertion de la saillie (13, 14, 15) vers la position de montage.

11. Agencement de fixation selon la revendication 8 ou la revendication 9, lorsque la revendication 9 dépend de la revendication 8, **caractérisé en ce que**
- la nervure (23, 24) est alignée parallèlement à la direction d'insertion de la saillie (13, 14, 15) vers la position de montage.

12. Agencement de fixation selon l'une des revendications 1 à 11, **caractérisé en ce que**
- au moins une des saillies (13, 14, 15) a la forme d'une broche cylindrique, et
- la broche est alignée perpendiculairement à la nervure (23, 24) .
